# EUROPEAN PATENT SPECIFICATION

(11) **EP 4 620 816 B1**
(45) Date of publication and mention of the grant of the patent: **09.09.2026**
(21) Application number: 24165469.8
(22) Date of filing: 22.03.2024
(51) Int. Cl.: B64D 11/04, F25B 9/00

(54) **VAPOR CYCLE REFRIGERATION SYSTEM, AIRCRAFT GALLEY UNIT, AIRCRAFT GALLEY AND AIRCRAFT**
KÄLTEMITTELKÜHLKREISLAUFSYSTEM, FLUGZEUGBORDKÜCHENEINHEIT, FLUGZEUGBORDKÜCHE UND FLUGZEUG
SYSTÈME DE RÉFRIGÉRATION À COMPRESSION DE VAPEUR, UNITÉ DE CUISINE DE BORD D'AÉRONEF, CUISINE DE BORD D'AÉRONEF ET AÉRONEF

(43) Date of publication of application: 24.09.2025
(73) Proprietor: Airbus Operations GmbH, 21129 Hamburg (DE)
(72) Inventor: Trümper, Torsten, 21129 Hamburg (DE)
(74) Representative: Airbus Germany

(56) References cited:
- EP-B1- 3 543 629
- EP-B1- 3 748 257
- DE-A1- 102019 119 272
- US-A1- 2024 059 124

## Description

### Technical Field

The invention is directed towards an aircraft comprising an aircraft galley, the aircraft galley comprising an aircraft galley unit, the aircraft galley unit comprising a vapor cycle refrigeration system.

### Background

Currently, vapor cycle refrigeration systems for cooling air in an aircraft use A1 class refrigerants, which have no flame propagation, i.e. have low flammability, which is indicated by the number "1", and no identified toxicity at concentrations at or below 400 ppm, i.e. have low toxicity, which is indicated by the letter "A". The refrigerant safety class referred to here is based on the ASHRAE Standard 34. Due to the EU F-Gas regulation, A3 class refrigerants will be used in the future, which - as indicated by the higher number "3" - have higher flammability than A1 class refrigerants.

Future-proof refrigerants consist mainly of hydrocarbons (A3) with the exception of Co2 (A1), which has a high-pressure level, or ammonia (B3).

EP 3 543 629 B1 is the closest prior art and discloses: a hermetically sealed hosing with an entire closed loop refrigerant piping accommodated inside the housing. Similar disclosures can be found in DE 10 2019 119272 A1 and EP 3 748 257 B1. Further prior art is disclosed in US 2014/059124 A1.

### Summary

The problem to be solved is to provide a vapor cycle refrigeration system with increased safety for operation with refrigerants that are more dangerous, e.g. more flammable and/or more toxic, than with the ones currently being used in an aircraft, e.g. A1 class refrigerants.

The problem is solved by the independently claimed subject matter.

The solution provides means for preventing dangerous amounts of refrigerant leakage into the atmosphere surrounding the vapor cycle refrigeration system, e.g. into an aircraft cabin.

The problem underlaying the invention is solved by the features of claim 1 :
Aircraft comprising an aircraft galley, the aircraft galley comprising an aircraft galley unit, the aircraft galley unit comprising a vapor cycle refrigeration system, the vapor cycle refrigeration system comprising: a closed loop refrigerant piping for circulating a refrigerant; and a hermetically sealed housing with an internal space, wherein the housing is optionally configured to remain hermetically sealed at an internal pressure of up to 4 bar; wherein the entire piping is accommodated within the housing such that leakage of the piping leads into the internal space instead of the atmosphere surrounding the housing.

Preferred embodiments are listed in the dependent claims.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows a side cross-section view of a vapor cycle refrigeration system according to the invention; and
- Fig. 2: shows a top view of an aircraft with the location of an aircraft galley therein, which may comprise the vapor cycle refrigeration system.

### Detailed Description

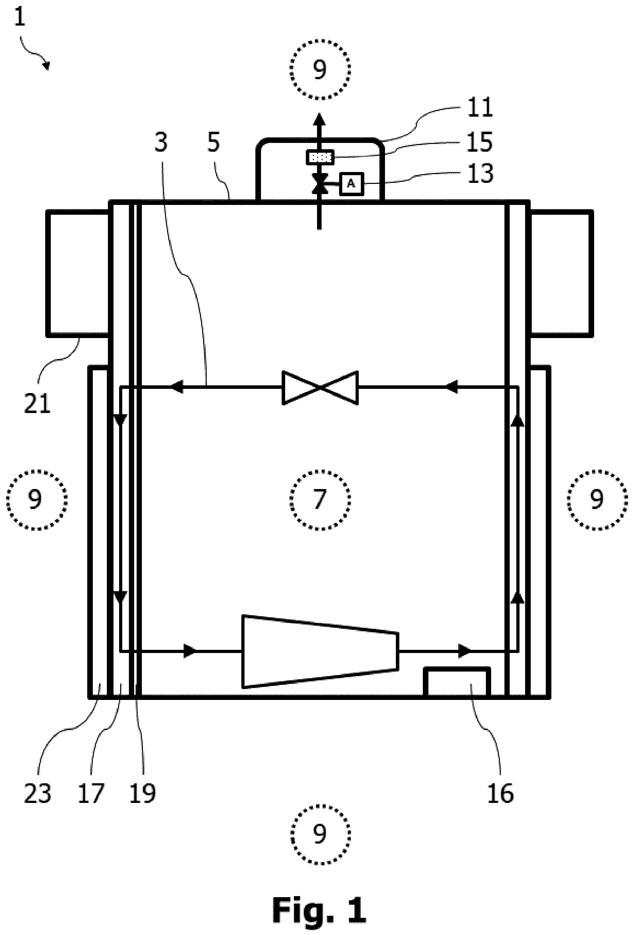

Fig. 1 shows a side cross-section view of a vapor cycle refrigeration system 1 according to the invention.

An aircraft comprises an aircraft galley, the aircraft galley comprising an aircraft galley unit, e.g. an aircraft galley trolley, an aircraft galley compartment, or an aircraft galley compartment insert, the aircraft galley unit comprising the vapor cycle refrigeration system 1.

The vapor cycle refrigeration system 1 comprises a closed loop refrigerant piping 3, which is hermetically sealed and in which a refrigerant is circulated. Here, the piping comprises a flammable refrigerant, e.g. an A3 class refrigerant.

The vapor cycle refrigeration system 1 further comprises a hermetically sealed housing 5 with an internal space 7, wherein the housing 5 is configured to remain hermetically sealed at an internal pressure of up to 4 bar. It can already be seen that the entire piping 3 is accommodated within the housing 5 such that leakage of the piping 3 leads into the internal space 7 instead of the atmosphere 9 surrounding the housing 5. Optionally, the amount of refrigerant in the piping 3 is configured to be such that leakage of the piping 3 leads to a rise in the internal pressure to a value at which the housing 5 still remains hermetically sealed, e.g. to a value of 2, 3 or 4 bar, e.g. at room temperature. This can be achieved by providing the piping 3 entirely within the internal space 7, or always closer to the internal space 7 than to the atmosphere 9 surrounding the housing 5. An alternative or additional provision to the latter may be that any portion of the piping 3 is distanced from the atmosphere 9 surrounding the housing 5 by material of the housing 5 that is stronger, i.e. more pressure resistant, than material of the housing 5 distancing the piping 3 from the internal space 7 at the exact same portion. Here, the internal space 7 comprises an inert gas, which in this case is nitrogen. In case refrigerant leaks from the piping 3 into the internal space 7, the inert gas reduces the refrigerants flammability. Optionally, the amount of inert gas in the internal space 7 is configured dependent on the amount of refrigerant in the piping 3 such that leakage of the piping 3 leads to gas mixture with a reduced flammability, e.g. a flammability that is reduced to the level of A1 class refrigerants.

Further, the housing 5 comprises a pressure relieve unit 11, which can comprise a burst disk or - as in this case - a safety valve 13, configured to automatically relieve pressure from the internal space 7 to the atmosphere 9 surrounding the housing 5, wherein the pressure relieve unit 11 may be configured to relieve an internal pressure of equal to or more than an allowable pressure inside the housing 5, e.g. 4 bar, as is the case in this example. Here, the pressure relieve unit 11 additionally comprises a filter cartridge 15 for capturing refrigerant from the internal space 7 upon pressure relieve, wherein the filter cartridge 15 is filled with active coal, silica gel or any other material capable of capturing hydrocarbon components. As shown, all of the gas inside the internal space 7 has to pass the pressure relieve unit 11 to reach the atmosphere 9 surrounding the housing 5. The filter cartridge 15 is configured such that it helps avoid a dangerous, i.e. flammable and/or toxic, atmosphere 9 surrounding the housing 5, when leakage from the piping 3 into the internal space 7 causes a built-up of internal pressure and subsequent pressure relieve through the pressure relieve unit 11. Optionally, the amount of active coal, silica gel or any other material capable of capturing hydrocarbon components is configured dependent on the amount of refrigerant in the piping 3 and the amount of inert gas, if any such inert gas is provided in the internal space 7, such that the gas mixture reaching the atmosphere 9 through the pressure relieve unit 11 has a reduced flammability, e.g. a flammability that is reduced to the level of A1 class refrigerants. In particular, the amount of active coal, silica gel or any other material capable of capturing hydrocarbon components may be in the range from 10 g to 40 g.

The housing 5 may further comprise a pressure sensor 16 that is configured to detect a pressure and/or a change in the pressure in the internal space 7, i.e. the internal pressure. The pressure sensor 16 may be configured to indicate the internal pressure and/or change in the internal pressure to the outside of the housing 5, i.e. the side of the housing 5 in contact with the atmosphere 9. Once the internal pressure and/or the change in the internal pressure has exceeded a predetermined threshold value, a temporary or permanent indication of malfunction of the housing 5 may be displayed to the outside of the housing 5. A permanent display of malfunction may be provided by a one-way indicator of internal pressure and/or change in the internal pressure. In other words, even if the internal pressure and/or change in the internal pressure occurs only for a short period of time to then return to an initial, normal state, e.g. a constant internal pressure within the range from 0 to 1 bar, the highest/lowest value of the internal pressure and/or change in the internal pressure will still be displayed. This helps avoid the use or re-use of a defective vapor cycle refrigeration system 1, which on first glance from the outside may not seem to be defective.

Here, the housing 5 comprises at least one wall 17, which comprises an inner surface defining the internal space 7 and an outer surface contacting the atmosphere 9 surrounding the housing 5, and in which at least a portion of the piping 3 is integrated, wherein the wall 17 is optionally covered with an insulation 19, and wherein the housing 5 optionally comprises at least one fan 21 configured to create an airflow along the outer surface. Fins 23, which are in thermal contact with the piping 3, either directly or indirectly via the wall 17, and which extend beyond the wall 17 into the atmosphere 9 surrounding the housing 5 are located to extend partially or entirely in the direction of the airflow created by the at least one fan 21.

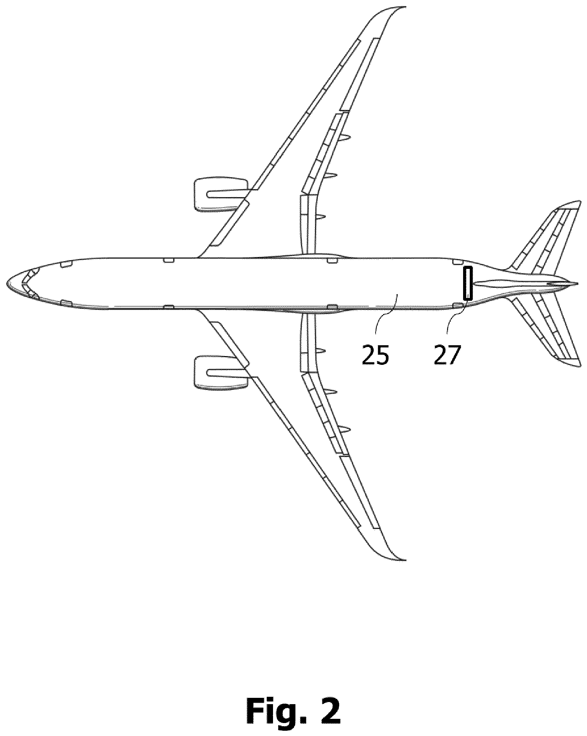

Fig. 2 shows a top view of an aircraft 25 with the location of an aircraft galley 27 therein.

## Claims

1. Aircraft (25), the aircraft (25) comprising an aircraft galley (27), the aircraft galley (27) comprising an aircraft galley unit, the aircraft galley unit comprising a vapor cycle refrigeration system (1), the vapor cycle refrigeration system (1) comprising:
a closed loop refrigerant piping (3) for circulating a refrigerant; and
a hermetically sealed housing (5) with an internal space (7);
wherein the entire piping (3) is accommodated within the housing (5) such that leakage of the piping (3) leads into the internal space (7) instead of the atmosphere (9) surrounding the housing (5).

2. Aircraft (25) according to claim 1,
wherein the internal space (7) comprises an inert gas.

3. Aircraft (25) according to claim 1 or 2,
wherein the housing (5) comprises a pressure relieve unit (11) for relieving pressure from the internal space (7) to the atmosphere (9) surrounding the housing (5).

4. Aircraft (25) according to claim 3,
wherein the pressure relieve unit (11) comprises a filter cartridge (15) for capturing refrigerant from the internal space (7) upon pressure relieve.

5. Aircraft (25) according to any one of claims 1 to 4,
wherein the housing (5) comprises at least one wall (17), which comprises an inner surface defining the internal space (7) and an outer surface contacting the atmosphere (9) surrounding the housing (5), and in which at least a portion of the piping (3) is integrated, such that the at least one wall (17) is a cold plate.

6. Aircraft (25) according to any one of claims 1 to 5,
wherein the housing (5) comprises a pressure sensor (16) that is configured to detect a pressure and/or a change in the pressure in the internal space (7).

7. Aircraft (25) according to any one of claims 1 to 6,
wherein the piping (3) comprises a flammable and/or toxic refrigerant.

## Patentansprüche

1. Luftfahrzeug (25), wobei das Luftfahrzeug (25) eine Luftfahrzeugbordküche (27) umfasst, wobei die Luftfahrzeugbordküche (27) eine Luftfahrzeugbordkücheneinheit umfasst, wobei die Luftfahrzeugbordkücheneinheit ein Kaltdampf-Kältesystem (1) umfasst, wobei das Kaltdampf-Kältesystem (1) Folgendes umfasst: ein geschlossenes Kältemittel-Rohrleitungssystem (3) zum Zirkulieren eines Kältemittels; und ein hermetisch dichtes Gehäuse (5) mit einem Innenraum (7); wobei das gesamte Rohrleitungssystem (3) innerhalb des Gehäuses (5) derart untergebracht ist, dass eine Leckage des Rohrleitungssystems (3) in den Innenraum (7) anstatt in die das Gehäuse (5) umgebende Atmosphäre (9) führt.

2. Luftfahrzeug (25) nach Anspruch 1, wobei der Innenraum (7) ein Inertgas umfasst.

3. Luftfahrzeug (25) nach Anspruch 1 oder 2, wobei das Gehäuse (5) eine Druckentlastungseinheit (11) zum Entlasten von Druck aus dem Innenraum (7) an die das Gehäuse (5) umgebende Atmosphäre (9) umfasst.

4. Luftfahrzeug (25) nach Anspruch 3, wobei die Druckentlastungseinheit (11) eine Filterpatrone (15) zum Auffangen von Kältemittel aus dem Innenraum (7) bei einer Druckentlastung umfasst.

5. Luftfahrzeug (25) nach einem der Ansprüche 1 bis 4, wobei das Gehäuse (5) mindestens eine Wand (17) umfasst, die eine den Innenraum (7) definierende Innenfläche und eine die das Gehäuse (5) umgebende Atmosphäre (9) kontaktierende Außenfläche umfasst und in die mindestens ein Abschnitt des Rohrleitungssystems (3) derart integriert ist, dass die mindestens eine Wand (17) eine Kühlplatte ist.

6. Luftfahrzeug (25) nach einem der Ansprüche 1 bis 5, wobei das Gehäuse (5) einen Drucksensor (16) umfasst, der dazu eingerichtet ist, einen Druck und/oder eine Druckänderung in dem Innenraum (7) zu erfassen.

7. Luftfahrzeug (25) nach einem der Ansprüche 1 bis 6, wobei das Rohrleitungssystem (3) ein entzündbares und/oder toxisches Kältemittel umfasst.

## Revendications

1. Aéronef (25), l'aéronef (25) comprenant un office d'aéronef (27), l'office d'aéronef (27) comprenant une unité d'office d'aéronef, l'unité d'office d'aéronef comprenant un système de réfrigération à compression de vapeur (1), le système de réfrigération à compression de vapeur (1) comprenant :
une tuyauterie de fluide frigorigène en circuit fermé (3) pour faire circuler un fluide frigorigène ; et un boîtier scellé hermétiquement (5) avec un espace interne (7) ; dans lequel l'ensemble de la tuyauterie (3) est logé à l'intérieur du boîtier (5) de sorte qu'une fuite de la tuyauterie (3) mène dans l'espace interne (7) au lieu de l'atmosphère (9) entourant le boîtier (5).

2. Aéronef (25) selon la revendication 1, dans lequel l'espace interne (7) comprend un gaz inerte.

3. Aéronef (25) selon la revendication 1 ou 2, dans lequel le boîtier (5) comprend une unité de décharge de pression (11) pour décharger la pression de l'espace interne (7) vers l'atmosphère (9) entourant le boîtier (5).

4. Aéronef (25) selon la revendication 3, dans lequel l'unité de décharge de pression (11) comprend une cartouche filtrante (15) pour capturer le fluide frigorigène de l'espace interne (7) lors d'une décharge de pression.

5. Aéronef (25) selon l'une quelconque des revendications 1 à 4, dans lequel le boîtier (5) comprend au moins une paroi (17), qui comprend une surface interne définissant l'espace interne (7) et une surface externe venant en contact avec l'atmosphère (9) entourant le boîtier (5), et dans laquelle au moins une partie de la tuyauterie (3) est intégrée, de sorte que l'au moins une paroi (17) est une plaque froide.

6. Aéronef (25) selon l'une quelconque des revendications 1 à 5, dans lequel le boîtier (5) comprend un capteur de pression (16) qui est configuré pour détecter une pression et/ou un changement de la pression dans l'espace interne (7).

7. Aéronef (25) selon l'une quelconque des revendications 1 à 6, dans lequel la tuyauterie (3) comprend un fluide frigorigène inflammable et/ou toxique.
